# FASCICULE DE BREVET EUROPEEN

(11) **EP 0 658 699 B1**
(45) Date de publication et mention de la délivrance du brevet: **23.08.2000**
(21) Numéro de dépôt: 94402908.1
(22) Date de dépôt: 16.12.1994
(51) Int. Cl.: F16D 66/02

(54) **Embout de dispositif de détection d'usure de garniture de friction**
Ansatzstück für eine Verschleisserfassungseinrichtung eines Bremsbelages
Joining piece for a wear detection device of brake lining

(30) Priorité: 17.12.1993 FR 9315232
(43) Date de publication de la demande: 21.06.1995
(73) Titulaire: COMPAGNIE PLASTIC OMNIUM Société Anonyme dite:, 69007 Lyon (FR)
(72) Inventeur: Schosseler, René, F-95100 Argenteuil (FR); Guillory, Michel, F-93380 Pierrefitte (FR)
(74) Mandataire: Leszczynski, André

(56) Documents cités:
- DE-U- 9 215 810
- FR-A- 2 663 703
- FR-A- 2 701 743

## Description

La présente invention concerne un embout de dispositif de détection d'usure de garniture de friction, notamment de plaquette de frein.

On sait que certains dispositifs de détection d'usure de plaquettes de freins comportent un embout qui vient coiffer l'extrémité d'un fil conducteur électrique, ledit embout étant inséré dans un trou ménagé à cet effet dans la garniture de friction, ou assujetti à la plaque-support de cette garniture.

L'avantage d'un tel embout réside dans le fait qu'il permet de positionner de façon précise l'extrémité du fil conducteur électrique par rapport à la surface d'usure de la garniture de friction, ce qui garantit une bonne précision dans la détection de l'épaisseur minimale à partir de laquelle il est nécessaire de remplacer la garniture de friction.

La réalisation d'un tel embout s'effectue généralement par surmoulage d'une matière plastique à l'extrémité du fil conducteur électrique, ou encore par perçage d'un embout moulé ou usinage d'un embout dans une barre de matière plastique, puis insertion et collage dudit fil à l'intérieur de l'embout.

De telles opérations entraînent des coûts de fabrication relativement importants en raison des nombreuses manipulations qu'elles impliquent et également, pour le collage de l'embout, en raison du prix de la colle.

De plus, le collage du fil pose des problèmes de positionnement du fil dans l'embout tant que la prise de la colle n'est pas effectuée.

De DE-U 92 15810, on connaît un dispositif de détection d'usure de type bifilaire. c'est-à-dire dans lequel un fil conducteur électrique est placé en boucle sans être dénudé dans le témoin d'usure. Ce dispositif, dans lequel peut être utilisé de la colle, présente les caractéristiques énumérées dans le préambule de la revendication 1 de la présente demande mais ne peut servir pour réaliser une détection de type monofilaire, dans laquelle se pose en outre le problème de l'étanchéité du témoin d'usure.

La présente invention vise à fournir un embout de dispositif de détection d'usure de garniture de friction qui ne présente pas les inconvénients précités et qui est, en outre, d'une réalisation particulièrement simple et économique.

La présente invention a pour objet un embout de dispositif de détection d'usure de garniture de friction, notamment de plaquette de frein, destiné à coiffer l'extrémité d'un fil conducteur électrique et à être inséré dans un orifice ménagé à cet effet dans une garniture de friction, ou assujetti à la plaque-support de cette garniture, réalisé en deux demi-coquilles aptes à être assemblées l'une contre l'autre en emprisonnant l'extrémité du fil conducteur électrique, caractérisé par le fait qu'il comporte des moyens d'étanchéité entre les deux demi-coquilles.

Selon l'invention, les demi-coquilles peuvent être issues de moulage, par exemple par injection ou compression, ou être obtenues par usinage d'un bloc de matière plastique.

On comprend que l'embout selon l'invention présente l'avantage de pouvoir être mis en place à l'extrémité d'un fil conducteur électrique de façon particulièrement simple, puisqu'il suffit de refermer les deux demi-coquilles sur le fil.

Selon l'invention, l'embout peut être utilisé dans un dispositif de détection d'usure à usure tangentielle ou dans un dispositif de détection d'usure à usure frontale.

Dans un premier mode de réalisation, l'une des demi-coquilles comporte, sur le bord périphérique de sa face en regard de l'autre demi-coquille, une gorge dans laquelle vient pénétrer une nervure réalisée sur le bord périphérique de la face en regard de l'autre demi-coquille.

Selon un deuxième mode de réalisation, on applique un joint d'étanchéité, un mastic silicone ou un autre produit ayant la même fonction sur les faces en regard des deux demi-coquilles avant assemblage de ces dernières.

Selon un troisième mode de réalisation, on soude les deux demi-coquilles l'une contre l'autre, par exemple par ultrasons ou au miroir. Dans un mode de réalisation préféré de l'invention, les

deux demi-coquilles sont réunies par une bande mince de matière plastique qui est de préférence obtenue lors du moulage en une seule opération des deux demi-coquilles, cette bande jouant le rôle d'une charnière autour de laquelle les deux demi-coquilles peuvent pivoter l'une par rapport à l'autre pour venir se refermer sur le fil conducteur électrique.

Dans ce mode de réalisation, les demi-coquilles peuvent être réalisées en chapelet, c'est-à-dire que de nombreuses demi-coquilles peuvent être moulées en étant réunies deux à deux par une bande mince de matière plastique, l'ensemble ainsi constitué formant un chapelet de demi-coquilles qui peut être manipulé facilement sur une chaîne de fabrication industrielle.

A partir d'un tel chapelet, il suffit de découper une bande mince sur deux pour obtenir des paires de demi-coquilles aptes à former un embout.

Selon l'invention, les deux demi-coquilles sont maintenues assemblées l'une contre l'autre par tout moyen approprié. notamment par des moyens d'encliquetage complémentaires réalisés sur les demi-coquilles.

Dans un premier mode de réalisation destiné à un dispositif monofilaire, les deux demi-coquilles comportent chacune un logement sensiblement semi-cylindrique destiné à recevoir le fil conducteur électrique, chaque logement d'une demi-coquille étant situé en regard du logement de l'autre demi-coquille lorsque ces dernières sont assemblées pour former l'embout selon l'invention.

Selon une variante préférée de ce mode de réalisation. chaque logement semi-cylindrique se termine, du côté de la face d'usure de l'embout; par un évidement de plus grande dimension destiné à recevoir une pièce de contact électrique solidaire de l'extrémité du fil conducteur électrique, par exemple la pièce de contact décrite dans FR-A-2701743.

Une telle pièce de contact assure également le maintien du fil dans la direction axiale.

Dans un second mode de réalisation destiné à un dispositif bifilaire, les deux demi-coquilles comportent chacune une gorge sensiblement semi-cylindrique en forme de U, destinée à recevoir le fil conducteur électrique disposé en boucle, chaque gorge d'une demi-coquille étant située en regard de la gorge de l'autre demi-coquille lorsque ces dernières sont assemblées pour former l'embout selon l'invention.

Selon une variante préférée, l'une des demi-coquilles comporte, sur le bord interne de la partie courbe de la gorge en forme de U, un pion qui coopère avec un orifice ménagé dans l'autre demi-coquille.

Ce pion permet de retenir axialement le fil dans l'embout lors de la fermeture des deux demi-coquilles et améliore également le maintien axial du fil lors des utilisations ultérieures de l'embout.

Dans un mode de réalisation préféré de l'invention, la surface latérale externe de l'embout comporte des moyens de retenue dans un orifice ménagé à cet effet dans la garniture de friction.

A titre d'exemple, de tels moyens de retenue peuvent être constitués par un filetage ou par des nervures circulaires.

La présente invention a également pour objet un procédé pour réaliser un embout à l'extrémité d'un fil conducteur électrique, qui est caractérisé par le fait que l'on réalise par moulage un chapelet de demi-coquilles réunies deux à deux par une bande mince, que l'on découpe une bande mince sur deux du chapelet pour obtenir une paire de demi-coquilles, et que l'on réunit les deux demi-coquilles d'une même paire en faisant pivoter autour de la bande mince l'une des deux demi-coquilles par rapport à l'autre, et en emprisonnant l'extrémité du fil conducteur électrique dans l'embout ainsi réalisé.

Dans le but de mieux faire comprendre l'invention, on va en décrire maintenant trois modes de réalisation donnés à titre d'exemples non limitatifs en référence au dessin annexé dans lequel :
- la figure 1 est une vue en perspective de deux demi-coquilles non assemblées selon un premier mode de réalisation de l'invention.
- la figure 2 est une vue en perspective des deux demi-coquilles de la figure 1 assemblées l'une contre l'autre,
- la figure 3 est une vue analogue à la figure 1 d'un embout selon un deuxième mode de réalisation de l'invention,
- la figure 4 est une vue analogue à la figure 3 de deux demi-coquilles selon un troisième mode de réalisation de l'invention, et
- la figure 5 est une vue en perspective d'un chapelet de demi-coquilles selon la figure 3, réunies deux à deux par des bandes minces.

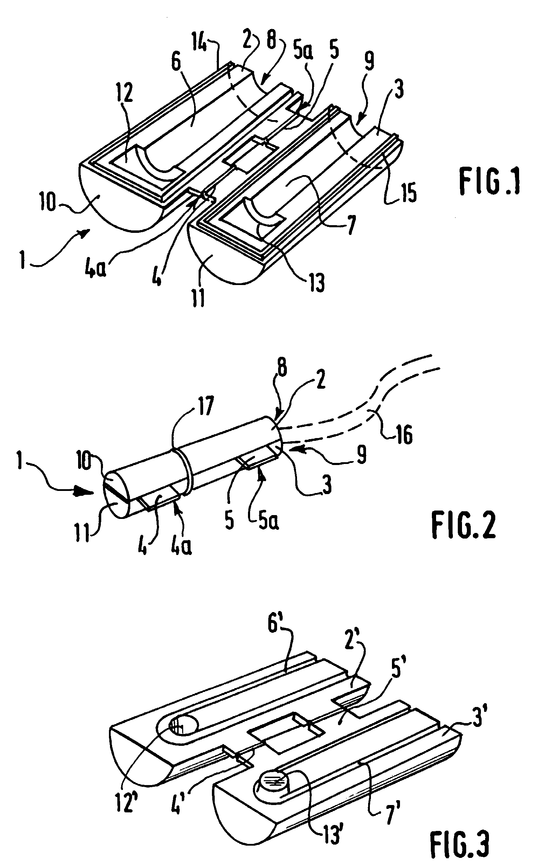

L'embout 1 représenté sur la figure 1 est obtenu par moulage en une seule pièce d'une matière plastique élastique tel qu'un polyamide, du polyéthéréthercétone (PEEK) ou un polymère à cristaux liquides (PCL).

Il comporte deux demi-coquilles 2 et 3 sensiblement identiques qui sont réunies par deux bandes formant charnières 4, 5. Dans leur partie médiane, les charnières 4, 5 comportent une réduction d'épaisseur 4a,5a correspondant à leur zone de pliure.

Chaque demi-coquille comporte un logement semi-cylindrique 6, 7 qui débouche dans la paroi 8,9 de chaque demi-coquille opposée à une paroi d'usure 10,11.

Du côté des parois d'usure 10,11, les logements semi-cylindriques 6,7 débouchent dans des évidements 12, 13 également cylindriques et de plus grand diamètre, qui sont destinés à recevoir une pièce de contact (non représentée), par exemple celle décrite dans FR-A-2701743. assujettie à l'extrémité d'un fil conducteur électrique (non représenté) dont le tronçon d'extrémité est pincé entre les deux logements 6 et 7.

Dans le mode de réalisation de la figure 1, la demi-coquille 2 comporte une gorge périphérique 14 tandis que la demi-coquille 3 comporte une nervure périphérique 15 destinée à venir pénétrer dans ladite gorge 14 lorsque les deux demi-coquilles sont assemblées.

De cette manière, on assure l'étanchéité de l'embout ainsi que le maintien des deux demi-coquilles assemblées l'une contre l'autre, du fait que la nervure 15 vient s'encliqueter dans la gorge 14.

Sur la figure 2, les deux demi-coquilles sont assemblées, les charnières 4 et 5 étant repliées autour de leur zone de pliure 4a, 5a.

Un fil conducteur électrique, schématiquement représenté en traits interrompus, 16, débouche par les faces 8, 9 opposées aux faces d'usure 10,11 de l'embout.

La surface latérale de l'embout 1 comporte en outre un anneau 17 qui constitue un moyen de retenue de l'embout dans un trou ménagé à cet effet dans une garniture de friction.

Sur la figure 3, on a représenté un deuxième mode de réalisation de l'invention.

Deux demi-coquilles 2',3' sont réunies par des charnières 4',5' comme décrit précédemment.

Dans ce mode de réalisation, chaque demi-coquille comporte une gorge 6',7' en forme de U destinée à recevoir un fil conducteur électrique pour constituer un embout de dispositif de détection d'usure bifilaire.

Sur le bord intérieur de la partie courbe de la gorge 6' en forme U, la demi-coquille 2' comporte un orifice 12' apte à coopérer avec un pion 13' prévu en regard sur la demi-coquille 3'.

Ce pion 13' permet de maintenir axialement le fil conducteur électrique lorsque ce dernier est mis en place sur la demi-coquille 3' avant que la demi-coquille 2' ne soit rabattue.

Une fois les deux demi-coquilles assemblées pour former un embout selon l'invention, le pion 13' améliore le maintien axial du fil conducteur électrique dans l'embout.

On peut noter en outre qu'il n'est pas nécessaire que les charnières 4,5,4' et 5' présentent une souplesse suffisante pour permettre plusieurs mouvements d'une demi-coquille par rapport à l'autre.

En effet, il suffit que les charnières permettent un seul pivotement des deux demi-coquilles l'une par rapport à l'autre.

Une fois l'assemblage réalisé, la destruction des charnières n'a aucune incidence sur la constitution de l'embout ainsi réalisé.

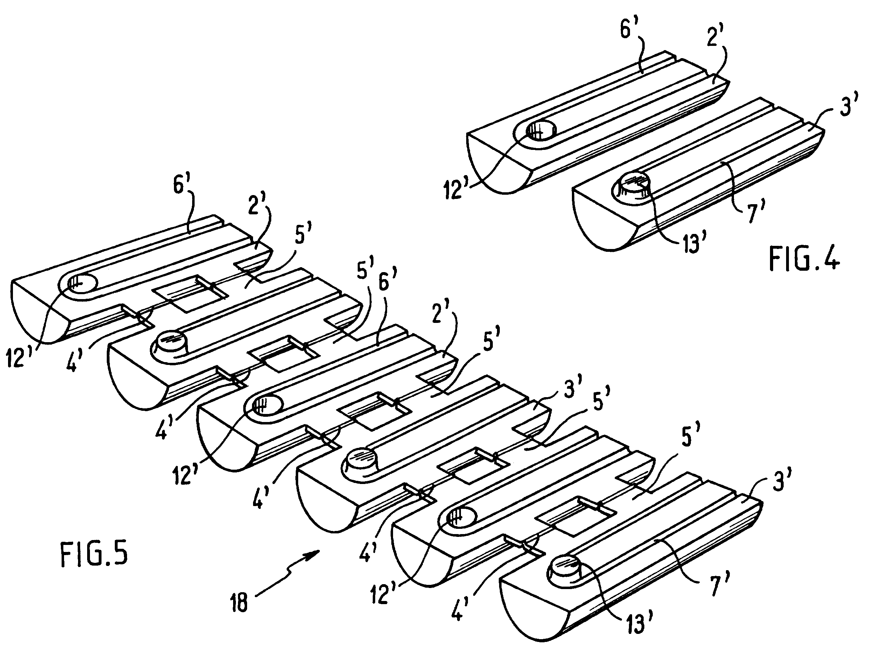

Dans le mode de réalisation représenté à la figure 4, les deux demi-coquilles ne comportent pas de bande mince formant charnière et peuvent être réunies simplement par rapprochement en regard l'une de l'autre.

La figure 5 représente un chapelet 18 de demi-coquilles réunies deux à deux par des bandes minces 4',5'. Un tel chapelet peut être obtenu par moulage.

A partir de ce chapelet, on peut extraire des paires de demi-coquilles similaires à celles de la figure 3 en découpant les bandes minces 4' et 5' séparant les paires de demi-coquilles.

## Revendications

1. Embout de dispositif de détection d'usure de garniture de friction, notamment de plaquette de frein, destiné à coiffer l'extrémité d'un fil conducteur électrique et à être inséré dans un orifice ménagé à cet effet dans une garniture de friction, ou assujetti à la plaque-support de cette garniture, réalisé en deux demi-coquilles (2,3, 2',3') aptes à être assemblées l'une contre l'autre en emprisonnant l'extrémité du fil conducteur électrique, caractérisé par le fait qu'il comporte des moyens d'étanchéité entre les deux demi-coquilles (2,3).

2. Embout selon la revendication 1, caractérisé par le fait que les moyens d'étanchéité comprennent, sur l'une (2) des deux demi-coquilles, une gorge (14) située sur le bord périphérique de sa face en regard de l'autre demi-coquille (3), dans laquelle vient pénétrer une nervure (15) réalisée sur le bord périphérique de la face en regard de l'autre demi-coquille (3).

3. Embout selon la revendication 1, caractérisé par le fait que les deux demi-coquilles (2,3) sont réunies par un joint d'étanchéité, un mastic silicone ou un autre produit ayant la même fonction d'étanchéité.

4. Embout selon l'une quelconque des revendications 1 à 3, caractérisé par le fait que les deux demi-coquilles (2,3) sont soudées l'une contre l'autre par exemple par ultrasons ou au miroir.

5. Embout selon l'une quelconque des revendications 1 à 4, caractérisé par le fait que les deux demi-coquilles (2,3,2',3') sont réunies par une bande mince de matière plastique (4,5,4',5') qui est obtenue de préférence lors du moulage en une seule opération des deux demi-coquilles (2,3,2',3'), cette bande (4,5,4',5') jouant le rôle d'une charnière autour de laquelle les deux demi-coquilles (2,3,2',3') peuvent pivoter l'une par rapport à l'autre pour venir se refermer sur le fil conducteur électrique.

6. Embout selon l'une quelconque des revendications 1 à 5, caractérisé par le fait que les deux demi-coquilles (2,3,2',3') comportent chacune un logement semi-cylindrique (6,7,6',7') destiné à recevoir le fil conducteur électrique, le logement (6,6') de chaque demi-coquille (2) étant situé en regard du logement (7,7') de l'autre demi-coquille (3) lorsque ces dernières sont assemblées pour former l'embout (1).

7. Embout selon la revendication 6, caractérisé par le fait que chaque logement semi-cylindrique (6,7) se termine, du côté de la face d'usure (10,11) de l'embout (1), par un évidement (12,13) de plus grande dimension, destiné à recevoir une pièce de contact électrique solidaire de l'extrémité du fil conducteur électrique.

8. Embout selon la revendication 6, caractérisé par le fait que chaque logement est une gorge (6',7') en forme de U.

9. Embout selon la revendication 8, caractérisé par le fait que l'une des deux demi-coquilles comporte un moyen de maintien axial (13') du fil conducteur électrique dans la gorge (7') correspondante.

10. Embout selon l'une quelconque des revendications 1 à 9, caractérisé par le fait qu'il comporte, sur sa face latérale externe, des moyens de retenue (17) dans l'orifice ménagé à cet effet dans la garniture de friction.

## Claims

1. End piece of a device for detecting friction lining wear, particularly brake pad wear, which is intended to fit over the end of an electrically conducting wire and be inserted in an orifice made for this purpose in a friction lining, or held firmly on the backing plate of this lining, the end piece being made as two half-shells (2, 3, 2', 3') which can be joined together one against the other, trapping the end of the electrically conducting wire, characterized in that it comprises means providing a seal between the two half-shells (2, 3).

2. End piece according to Claim 1, characterized in that the sealing means comprise, on one (2) of the two half-shells, a groove (14) located along the peripheral edge of its face facing the other half-shell (3), which groove a rib (15) made on the peripheral edge of the face opposite belonging to the other half-shell (3) enters.

3. End piece according to Claim 1, characterized in that the two half-shells (2, 3) are connected by a seal made of silicon mastic or some other product which fulfils the same sealing function.

4. End piece according to any one of Claims 1 to 3, characterized in that the two half-shells (2, 3) are welded together, for example using ultrasonic or mirror welding.

5. End piece according to any one of Claims 1 to 4, characterized in that the two half-shells (2, 3, 2', 3') are connected by a thin strip of plastic (4, 5, 4', 5') which is preferably obtained at the time of moulding the two half-shells (2, 3, 2', 3') in a single operation, this strip (4, 5, 4', 5') acting as a hinge about which the two half-shells (2, 3, 2', 3') can pivot one with respect to the other to close on the electrically conducting wire.

6. End piece according to any one of Claims 1 to 5, characterized in that the two half-shells (2, 3, 2', 3') each comprise a semi-cylindrical housing (6, 7, 6', 7') intended to accommodate the electrically conducting wire, the housing (6, 6') of each half-shell (2) being located facing the housing (7, 7') of the other half-shell (3) when these half-shells are assembled to form the end piece (1).

7. End piece according to Claim 6, characterized in that each semi-cylindrical housing (6, 7) ends, on the same side as the wearing face (10, 11) of the end piece (1), in a cavity (12, 13) of larger size, intended to accommodate an electric-contact piece secured to the end of the electrically conducting wire.

8. End piece according to Claim 6, characterized in that each housing is a U-shaped groove (6', 7').

9. End piece according to Claim 8, characterized in that one of the two half-shells comprises a means (13') for axially holding the electrically conducting wire in the corresponding groove (7').

10. End piece according to any one of Claims 1 to 9, characterized in that it comprises, on its external lateral face, means (17) of retaining it in the orifice formed for this purpose in the friction lining.

## Patentansprüche

1. Ansatzstück für eine Einrichtung zum Erfassen des Verschleißes von Reibbelägen, insbesondere Bremsklötzen, das dazu bestimmt ist, den Endbereich eines elektrischen Leiters zu umhüllen und eingeschoben zu werden in eine Öffnung, die hierfür in einem Reibbelag vorgesehen ist oder befestigt ist an einem Tragteil dieses Reibbelags, und das aus zwei Halbschalen (2, 3, 2', 3') hergestellt ist, die so ausgelegt sind, dass die eine Halbschale gegen die andere Halbschale zusammengesetzt werden kann, wobei der Endbereich des elektrischen Leiters umfangen wird, dadurch gekennzeichnet, dass es Mittel zum Abdichten zwischen den beiden Halbschalen (2, 3) aufweist.

2. Ansatzstück nach Anspruch 1, dadurch gekennzeichnet, dass die Mittel zum Abdichten an einer (2) der beiden Halbschalen eine Pille (14) aufweisen, die am Randbereich seiner der anderen Halbschale (3) gegenüberliegenden Fläche angeordnet ist und in welche Rille ein Vorsprung (15) in Eingriff gelangt, der am Randbereich der gegenüberliegenden Fläche der anderen Halbschale (3) ausgebildet ist.

3. Ansatzstück nach Anspruch 1, dadurch gekennzeichnet, dass die beiden Halbschalen (2, 3) durch eine abdichtende Verbindungsstelle, einen Silikonkitt oder ein anderes Produkt, das die gleiche Abdichtfunktion hat, miteinander verbunden sind.

4. Ansatzstück nach einem der Ansprüche 1 bis 3, dadurch gekennzeichnet, dass die beiden Halbschalen (2, 3) miteinander verschweißt sind beispielsweise durch Ultraschall oder nach dem Spiegelverfahren.

5. Ansatzstück nach einem der Ansprüche 1 bis 4, dadurch gekennzeichnet, dass die beiden Halbschalen (2, 3, 2', 3') durch ein schmales Band aus Kunststoff (4, 5, 4', 5') miteinander verbunden sind, das erhalten wurde vorzugsweise während des Gussverfahrens der beiden Halbschalen (2, 3, 2', 3') in einem einzigen Arbeitsschritt, dieses Band (4, 5, 4', 5') übernimmt die Funktion eines Scharniers, um das die beiden Halbschalen (2, 3, 2', 3') die eine zur anderen hin, geklappt werden können, um den elektrischen Leiter einzuschließen.

6. Ansatzstück nach einem der Ansprüche 1 bis 5, dadurch gekennzeichnet, dass die beiden Halbschalen (2, 3, 2', 3') jeweils einen halbzylindrischen Aufnahmeraum aufweisen, der für die Aufnahme des elektrischen Leiters bestimmt ist, dabei ist der Aufnahmeraum (6, 6') jeder Halbschale (2) gegenüberliegend dem Aufnahmeraum (7, 7') der anderen Halbschale (3) angeordnet, wenn die beiden Halbschalen zur Ausbildung des Ansatzstücks (1) zusammengesetzt sind.

7. Ansatzstück nach Anspruch 6, dadurch gekennzeichnet, dass jeder halbzylindrische Aufnahmeraum (6, 7) zur Seite der Abnutzungsfläche (10, 11) des Ansatzstücks (1) hin durch eine Ausnehmung (12, 13) mit größeren Abmessungen abgeschlossen ist, die für die Aufnahme eines elektrischen Kontaktstückes bestimmt ist, das mit dem Endbereich des elektrischen Leiters verbunden ist.

8. Ansatzstück nach Anspruch 6, dadurch gekennzeichnet, dass jeder Aufnahmeraum eine U-förmige Rille (6', 7') ist.

9. Ansatzstück nach Anspruch 8, dadurch gekennzeichnet, dass eine der beiden Halbschalen ein Mittel für den axialen Halt (13') des elektrischen Leiters in der entsprechenden Rille (7') aufweist.

10. Ansatzstück nach einem der Ansprüche 1 bis 9, dadurch gekennzeichnet, dass es auf seiner äußeren Seitenfläche Rückhaltemittel (17) in der Öffnung, die zu diesem Zweck im Reibbelag vorgesehen ist, aufweist.
